Europäisches Patentamt

(19) European Patent Office

Office européen des brevets

(11) Numéro de publication: **0 134 177**
**B1**

(12) **FASCICULE DE BREVET EUROPÉEN**

(45) Date de publication du fascicule du brevet:
17.01.90

(51) Int. Cl. ⁴: **E 21 B 17/00**

(21) Numéro de dépôt: **84401679.0**

(22) Date de dépôt: **16.08.84**

(54) **Tiges de forage en particulier pour puits de pétrole ou de gaz comportant une zone destinée à recevoir les mâchoires de serrage.**

(30) Priorité: **17.08.83 FR 8313379**

(43) Date de publication de la demande:
**13.03.85 Bulletin 85/11**

(45) Mention de la délivrance du brevet:
**17.01.90 Bulletin 90/03**

(54) Etats contractants désignés:
**AT BE DE GB IT NL SE**

(56) Documents cité:
**FR-A-1 061 275**
**FR-A-1 125 485**
**FR-A-1 232 884**
**FR-A-2 064 109**
**FR-A-2 512 134**
**GB-A-1 005 844**
**US-A-1 811 939**
**US-A-3 107 930**

(73) Titulaire: **VALLOUREC Société Anonyme dite.**
**7, place du Chancelier Adenauer**
**F-75116 Paris (FR)**

(72) Inventeur: **Fillet, Pierre René**
**64, rue du Surmelin**
**F-75020 Paris (FR)**

(74) Mandataire: **Leszczynski, André**
**CABINET NONY & CIE. 29 rue Cambacérès**
**F-75008 Paris (FR)**

EP 0 134 177 B1

LIBERGRAF, STOCKHOLM 1990

## Description

La présente invention est relative à de nouvelles tiges de forage destinées à creuser des puits dans le sol en particulier pour l'industrie du pétrole et du gaz souterrain qui comportent au voisinage de la partie supérieure de chaque élément de tige une zone destinée à servir d'appui aux mâchoires qui supportent l'ensemble de la colonne de tige.

On sait que lors de la mise en place d'une colonne de tiges de forage, il est nécessaire de maintenir la partie supérieure de la colonne par des mâchoires constituées le plus souvent par des mors ou mâchoires auto-serrantes dont la partie interne striée prend appui contre la tige de forage au voisinage du raccord fileté femelle et dont la partie externe de forme conique qui s'engage dans une pièce de forme correspondante assure un auto-coincement des mâchoires qui maintiennent ainsi la colonne de tiges de forage qui est suspendue sur toute sa hauteur.

Dans la technique actuellement utilisée, (voir par exemple FR-A-1 061 275) les striures réalisées sur la face des mâchoires qui prennent appui contre la tige de forage, provoquent sur la surface de cette dernière des déformations plastiques qui se traduisent par des succession d'entailles. Il en résulte une diminution importante de la résistance de la tige à l'endroit où s'appliquent les mâchoires auto-serrantes, ce qui a pour effet de provoquer à cet endroit des ruptures par fatigue de la tige, notamment dans le cas où l'on réalise des forages incurvés.

En d'autres termes les entailles, généralement de formes angulaires, réalisées par les mâchoires sur les tiges de forage, réduisent fortement leur résistance à la fatigue, ce qui oblige au remplacement prématuré de ces tiges ou provoque des accidents.

La présente invention vise à supprimer cet inconvénient en réalisant sur la partie de chaque élément de tige de forage au voisinage du raccord fileté femelle, une surface de révolution dont la génératrice présente une forme complémentaire à celle qui est donnée à la surface d'appui des mâchoires auto-serrantes auxquelles il a été fait allusion ci-dessus.

La présente invention concerne en conséquence une tige de forage telle que définie par la revendication 1, des mâchoires auto-serrantes telles que définies par la revendication 10 ainsi que la combinaison tige de forage - mâchoires auto-serrantes telle que définie par la revendication 12.

La réalisation de la surface de révolution sur la partie supérieure des éléments de tige de forage est avantageusement réalisée par moletage ou galetage, ce qui d'une part permet de réaliser le profil voulu sans perte de matière et qui, d'autre part, grâce à l'écrouissage de la partie superficielle de la tige de forage, confère à cette dernière une meilleure résistance à la fatigue.

Selon un autre mode de réalisation, le profil selon l'invention peut être obtenu par usinage mécanique suivi de préférence d'un traitement par exemple par grenaillage pour accroître la résistance à la fatigue.

De surcroît, les profils des surfaces de révolution ainsi obtenues peuvent avoir une profondeur donnée en ne réduisant l'épaisseur du tube que d'environ la moitié de cette profondeur, ceci grâce au refoulement de métal vers l'extérieur.

Le profil de la surface de révolution ainsi réalisée sur l'élément de tige de forage, présente de préférence une forme circulaire au fond de la partie creuse avec un rayon aussi grand que possible.

Conformément à l'invention, il est avantageux de réaliser un profil disymétrique, la partie supérieure du profil creux étant de préférence constituée par une droite qui fait avec une perpendiculaire à l'axe de la tige un angle compris entre 10 et 45° et de préférence voisin de 30°, alors que la partie inférieure du profil est de préférence constituée aussi par une droite faisant avec une perpendiculaire à l'axe de la tige un angle compris entre 45 et 80° et de préférence voisin de 60°, l'angle entre la partie supérieure et la partie inférieure du profil étant compris entre 55 et 125° et de préférence voisin de 90°.

La profondeur totale du profil peut être comprise entre environ 1 et 2 mm et de préférence voisine de 1,5 mm.

Le profil décrit ci-dessus peut se répéter le long de la partie d'un élément de tige de forage au voisinage du filetage femelle sur une longueur d'environ 100 à 900 mm et de préférence sur une longueur voisine de 600 mm avec un pas de l'ordre de 1 à 10 mm et de préférence voisine de 5 mm (c'est à dire un profil tous les 5 mm environ).

Les mâchoires qui maintiennent la colonne de tige ont un profil complémentaire réalisé avec un nombre minimum de dents d'environ vingt de manière à pouvoir s'engager facilement sur le profil de l'élément de la tige de forage et à ne pas provoquer sur la tige des pressions de contact supérieures à la limite élastique du métal de la tige.

Dans le but de mieux faire comprendre l'invention, on va en décrire maintenant à titre d'illustration et sans aucun caractère limitatif un mode de réalisation pris comme exemple et représenté sur le dessin annexé.

Sur ce dessin:

- la figure 1 représente une vue schématique d'un dispositif selon l'état de la technique pour supporter une colonne de tiges de forage;
- la figure 2 représente à plus grande échelle la partie II de la figure 1 modifiée conformément à l'invention;
- la figure 3 est une vue à encore plus grande échelle, représentant le profil de la surface de révolution réalisée conformément à l'invention sur la partie supérieure d'un élément de tige de forage pour recevoir les mâchoires auto-serrantes et,
- la figure 4 est une vue schématique représentant une molette permettant de réaliser sur les éléments de tiges de forage les surfaces de révolution selon l'invention.

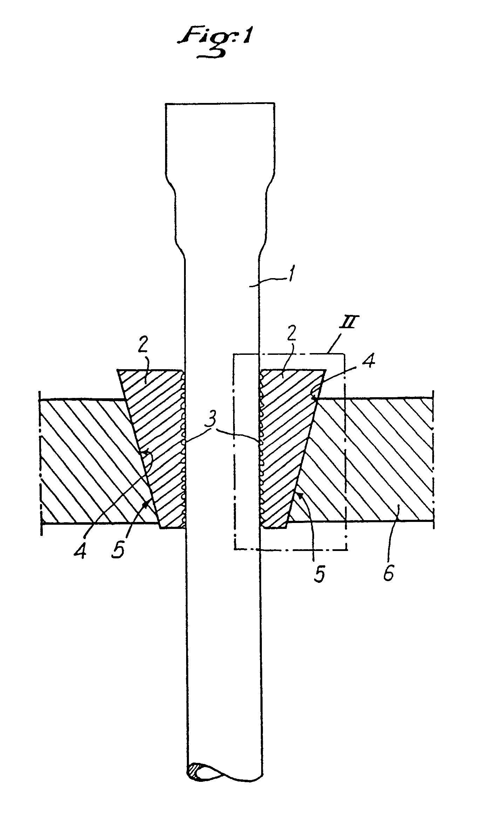

On voit sur la figure 1 comment est supportée l'extrémité supérieure de la colonne de tiges de forage 1 grâce à des mâchoires 2 qui présentent des striures acérées 3 sur leur face interne qui s'appuient contre la tige de forage 1 et qui présentent sur leur face externe une surface conique 4 qui coopère avec une surface conique de forme correspondante 5 disposée sur un plateau 6.

On comprend dans ces conditions, comment les mâchoires 2 qui sont par exemple au nombre de trois réparties sur la périphérie de la tige de forage sont entraînées vers le bas par le poids de la tige de forage qui se transmet par les striures 3, tandis que les surfaces coniques 4 et 5 repoussent vers la tige de forage les mâchoires 2 par un effet d'auto-coincement.

On conçoit que, compte-tenu du poids important que peut atteindre la colonne de tige de forage, il s'exerce des efforts considérables radialement sur la tige de forage de telle sorte que les striures 3 s'incrustent très fortement dans la surface de la tige de forage en y provoquant des entailles à arêtes vives qui réduisent de manière importante la résistance à la fatigue des éléments de tiges de forage.

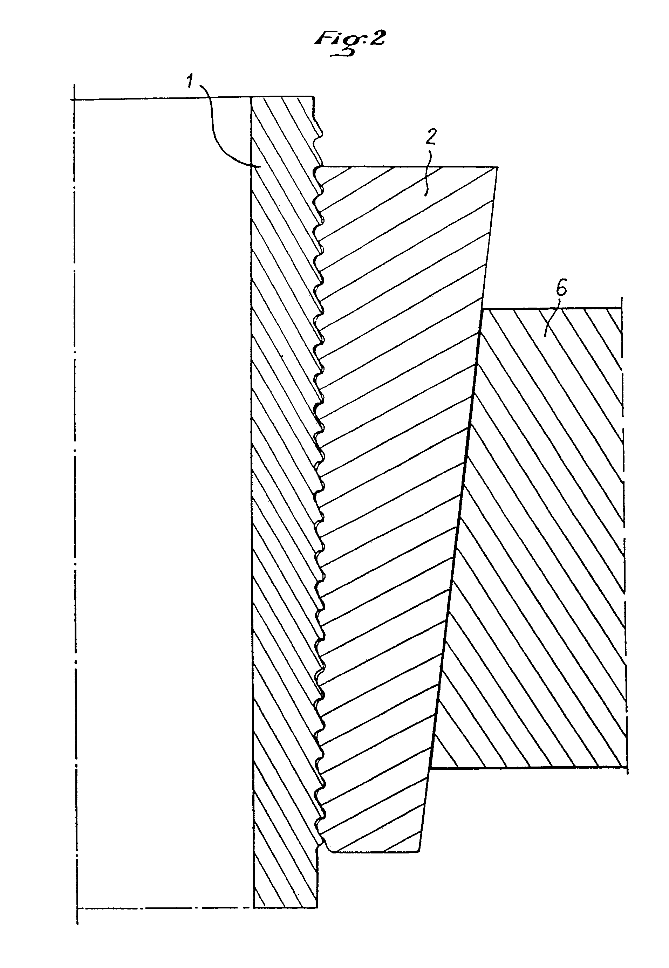

La figure 2 représente la partie II de la figure 1 modifiée conformément à l'invention.

On retrouve sur la figure 2 le plateau 6, les mâchoires 2 ainsi que l'élément de tige de forage 1.

Conformément à l'invention, on a donné un profil particulier à la surface externe de l'élément de tige de forage 1 qui est destinée à coopérer avec les mâchoires 2, la surface interne de ces mâchoires qui s'appuie sur la tige de forage ayant une forme complémentaire.

Le profil de la surface de la tige possède avantageusement une longueur axiale supérieure à celle des mâchoires de manière à permettre un engagement facile.

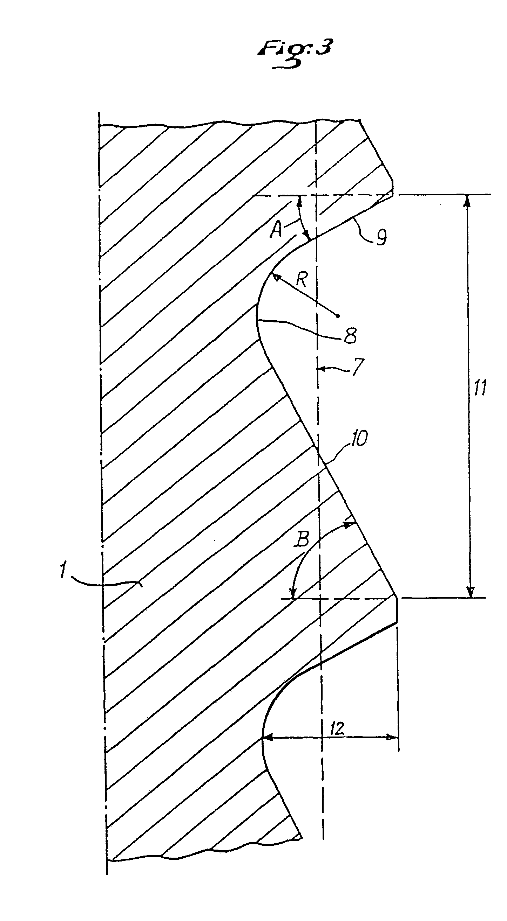

La figure 3 représente à plus grande échelle le profil extérieur de la surface de révolution réalisée selon l'invention sur la tige de forage. On y retrouve la tige de forage 1 et représentée en trait interrompu la ligne 7 qui représente la surface extérieure de l'élément de tige de forage avant que ne lui soit conféré le profil conforme à l'invention.

Comme on le voit sur la figure 3, la profondeur du profil se répartit environ par moitié de part et d'autre de la ligne 7, ce qui permet d'obtenir un profil de profondeur donnée en ne diminuant que d'environ la moitié, l'épaisseur du métal de la tige.

Dans le mode de réalisation représenté, le profil présente à sa partie interne une forme torique 8 dont le rayon du cercle générateur qui est aussi grand que possible, est par exemple compris entre 0,2 et 2 mm.

La partie torique 8 est prolongée à sa partie supérieure par une zone tronconique 9 dont la génératrice fait avec un plan perpendiculaire à l'axe de la tige de forage un angle A qui est compris entre environ 10 et 45° et qui est avantageusement voisin de 30°.

La partie torique 8 est prolongée à sa partie inférieure par une zone tronconique 10 dont la génératrice fait avec un plan perpendiculaire à l'axe de la tige de forage un angle B qui est compris entre environ 45 et 80° et qui est de préférence voisine de 60° l'angle que font entre elles les génératrices des cônes 9 et 10 étant compris entre environ 55 et 125° et étant de préférence voisin de 90°.

Le pas, c'est à dire la distance séparant deux profils disposés côte à côte longitudinalement qui est représenté en 11 sur la figure 3, est compris généralement entre 1 et 10 de mm et de préférence égal à environ 5 mm.

La profondeur du profil représenté en 12 sur la figure 3 peut être comprise entre environ 1 et 2 mm et elle est avantageusement voisine de 1,5 mm ce qui correspond à une diminution de l'épaisseur utile de la tige de forage de seulement environ 0,7 mm.

Le profil représenté sur la figure 3 est répété sur une longueur d'environ 100 à 900 mm de la tige de forage et de préférence sur une longueur comprise voisine de 600 mm de manière à donner sur ces mêmes longueurs des surfaces de révolution ayant le profil décrit.

Les mâchoires auto-serrantes 2 ont sur leur surface interne une surface de révolution de forme complémentaire et elles comportent au moins vingt dents dont la forme correspond à celle des gorges qui ont été décrites ci-dessus.

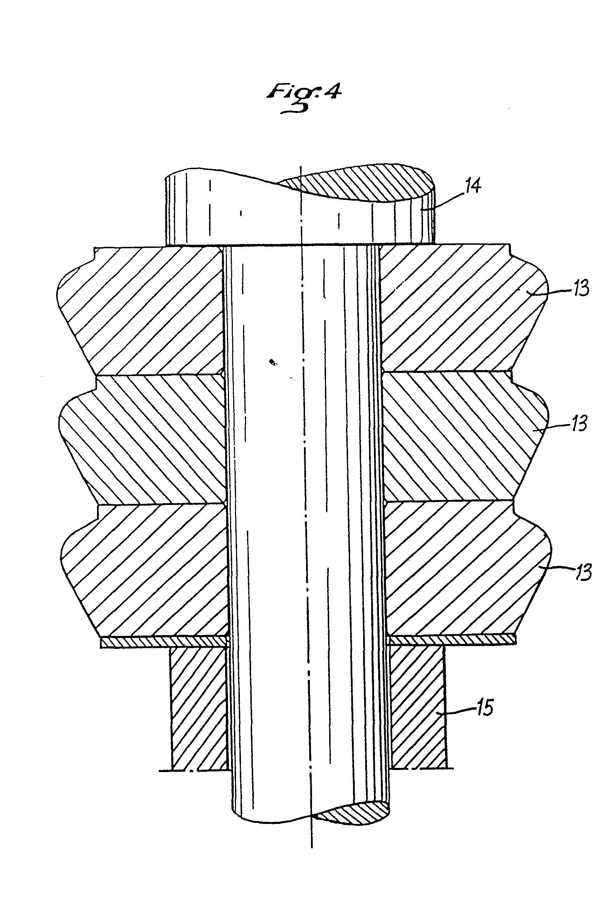

On a représenté schématiquement sur la figure 4 les galets 13 qui permettent de réaliser par moletage selon une technique conventionnelle les surfaces de révolution créées conformément à l'invention sur les tiges de forage.

Dans le mode de réalisation de la figure 4, les galets 13 sont assemblés sur un axe 14 en étant maintenus entre un épaulement et une pièce 15 de contre-appui.

La surface de révolution conforme à l'invention est obtenue en faisant agir les galets 13 successivement en différents endroits de la tige de forage.

On voit que, conformément à l'invention, il est possible de réaliser d'une manière simple et peu coûteuse sur les tiges de forage des surfaces de révolution dont les profils correspondent aux profils donnés à la surface interne des mâchoires auto-serrantes.

On peut de cette manière maintenir facilement les colonnes de tiges de forage sans abaisser de manière sensible leur résistance mécanique et en particulier leur résistance à des contraintes alternées tout en conservant dans la zone de serrage de bonnes propriétés de résistance à la fatigue.

Il est bien entendu que le mode de réalisation qui a été décrit ci-dessus n'a été donné qu'à titre d'exemple et ne présente aucun caractère limitatif de l'invention.

En particulier, il est clair que les surfaces de révolution réalisées sur les tiges de forage conformément à l'invention peuvent avoir des profils différents de celui qui a été réalisé à condition toutefois d'éviter de réaliser ces profils avec des angles aigus ou de faibles rayons de courbure qui accroîtraient la fragilité de la tige de forage. C'est ainsi que les surfaces de révolution selon l'invention peuvent avoir par exemple des profils de forme circulaires ou de forme elliptique à grand axe parallèle ou incliné par rapport à l'axe de la tige.

Il va également de soi que les surfaces de révolution réalisées selon l'invention peuvent être obtenues par des procédés d'usinage autres que le moletage ou le galetage qui a été décrit ci-dessus. Dans le cas d'un usinage par enlèvement de métal, il est avantageux de prévoir un traitement de surface par exemple par grenaillage.

Enfin les profils selon l'invention peuvent être également réalisés sur la totalité des éléments ou accessoire utilisés dans la technique du forage.

**Revendications**

1. Tige de forage (1) destinée a être assemblée avec d'autres tiges de même nature à l'aide de moyens de raccordement tels que des joints filetés, pour constituer des colonnes de tiges de forage devant être maintenues par des mâchoires à leur partie supérieure, notamment pour l'industrie du pétrole et du gaz naturel, caractérisée par le fait qu'en dehors des moyens de raccordement, elle comporte à sa périphérie une surface de révolution constituée par une succession de profils creux présentant, du côté de l'axe de la tige, une forme arrondie (8), ladite surface de révolution étant destinée à servir d'appui aux faces internes de forme complémentaire des mâchoires auto-serrantes (2) qui assurent le maintien de la colonne de tiges de forage.

2. Tige de forage selon la revendication 1, caractérisée par le fait que le profil élémentaire de la surface de révolution présente une forme torique prolongée à sa partie haute et à sa partie basse par des surfaces tronconiques.

3. Tige selon la revendication 2, caractérisée par le fait que la génératrice de la surface tronconique disposée à la partie haute du profil élémentaire fait avec une perpendiculaire à l'axe de la tige de forage un angle compris entre 10 et 45° et de préférence voisin de 30°.

4. Tige de forage selon la revendication 2, caractérisée par le fait que la génératrice de la surface tronconique disposée à la partie basse du profil élémentaire fait avec une perpendiculaire à l'axe de la tige de forage, un angle compris entre environ 45 et 80° et de préférence voisin de 60°.

5. Tige de forage selon l'une des revendications 2, 3 ou 4, caractérisée par le fait que les génératrices des surfaces tronconiques font entre elles un angle d'environ 90°.

6. Tige de forage selon l'une quelconque des revendications précédentes, caractérisée par le fait que la profondeur totale du profil élémentaire est comprise entre environ 1 et 2 mm et de préférence voisine de 1,5 mm.

7. Tige selon l'une quelconque des revendications précédentes, caractérisée par le fait que la surface de révolution s'étend sur une longueur de tige d'environ 100 à 900 mm et de préférence voisine de 600 mm.

8. Tige selon l'une quelconque des revendications précédentes, caractérisée par le fait que les profils élémentaires sont répétés avec un pas d'environ 1 à 10 mm et de préférence d'environ 5 mm.

9. Tige selon l'une quelconque des revendications précédentes, caractérisée par le fait que la surface de révolution est réalisée par moletage ou galetage.

10. Mâchoires auto-serrantes pour maintenir une tige de forage selon l'une quelconque des revendications précédentes, caractérisées par le fait que la surface interne des mâchoires auto-serrantes présente sur sa périphérie une surface de révolution constituée par une succession de profils en relief présentant en direction de la tige de forage une forme convexe arrondie complémentaire à la forme arrondie des profils creux situés sur la tige de forage, chaque profil en relief étant prolongé à sa partie supérieure par une surface tronconique faisant avec l'axe de la tige un angle supérieure à 45° et à sa partie inférieure par une autre surface tronconique faisant avec l'axe de la tige un angle inférieure à 45°.

11. Mâchoires selon la revendication 9, caractérisées par le fait que la surface interne comporte au moins 20 dents correspondant au profil élémentaire de la tige de forage.

12. Dispositif pour supporter une tige de forage, caractérisé par le fait qu'il comporte en combinaison une tige de forage selon l'une quelconque des revendications 1 à 9, et des mâchoires selon les revendications 10 à 11.

**Patentansprüche**

1. Bohrstange (1), die mit Bohrstangen derselben Art durch Verbindungsmittel, z. B. Schraubverbindungen zu Bohrgestängen zusammengebaut werden, bevor sie durch Klemmbacken in ihrem oberen Bereich gehalten wird, insbesondere für die Erdöl- oder Gasindustrie, dadurch gekennzeichnet, daß sie außer ihren Verbindungsmitteln auf ihrem Umfange eine Rotationsfläche aufweist, die aus aufeinanderfolgenden eingehöhlten Profilierungen besteht, die an ihrer der Achse der Bohrstange zugewandten Seite eine abgerundete Form (8) aufweisen, wobei die Rotationsfläche als Stützfläche für die eine komplimentäre Form aufweisenden Innenflächen von selbst spannenden Klemmbacken dienen, welche die Halterung des Bohrgestänges sicherstellen.

2. Bohrstange nach Anspruch 1, dadurch gekennzeichnet, daß das Profilierungselement der Rotationsfläche eine ringförmige Formgebung aufweist, deren oberer und unterer Bereich sich in konische Flächen fortsetzt.

3. Bohrstange nach Anspruch 2, dadurch gekennzeichnet, daß die Erzeugende der im oberen Bereich der Profilierung verlaufenden konischen Fläche mit einer Senkrechten zur Achse der Bohrstange der Bohrstange einen Winkel bildet, der zwischen 10 und 45°, vorzugsweise bei 30°, liegt.

4. Bohrstange nach Anspruch 2, dadurch gekennzeichnet, daß die Erzeugende der im unteren Bereich der Profilierung verlaufenden Konischen Fläche mit einer Senkrechten zur Achse der Bohrstange einen Winkel bildet, der zwischen 45 und 80°, vorzugsweise bei 60°, liegt.

5. Bohrstange nach einem der Ansprüche 2, 3 oder 4, dadurch gekennzeichnet, daß die Erzeugenden der konischen Flächen unter sich einen Winkel von rund 90° bilden.

6. Bohrstange nach einem der vorhergehenden Ansprüche, dadurch gekennzeichnet, daß die gesamte Tiefe des Profilierungselementes zwischen 1 bis 2 mm, vorzugsweise bei 1,5 mm, liegt.

7. Bohrstange nach einem der vorhergehenden Ansprüche, dadurch gekennzeichnet, daß sich die Rotationsfläche über eine Länge der Stange erstreckt, die etwa bei 100 - 900 mm, vorzugsweise bei 600 mm liegt.

8. Bohrstange nach einem der vorhergehenden Ansprüche, dadurch gekennzeichnet, daß die Profilierungselemente sich in Schritten von 1 bis 10 mm, vorzugsweise von 5 mm wiederholen.

9. Bohrstange nach einem der vorhergehenden Ansprüche, dadurch gekennzeichnet, daß die Rotationsfläche durch Einrollen bzw. Einwalzen hergestellt wird.

10. Selbstspannende Klemmbacken zum Halten einer Bohrstange nach einem der vorhergehenden Ansprüche, dadurch gekennzeichnet, daß die Innenfläche der selbstspannenden Klemmbacken eine umfänglich verlaufende Rotationsfläche darstellt, die aus aufeinanderfolgenden reliefartigen Profilierungen besteht, die in Richtung auf die Bohrstange eine konvex abgerundete Form aufweisen, welche komplementär zu der abgerundeten Form der eingehöhlten Profilierungen an der Bohrstange ist, wobei jede der relieffförmigen Profilierungen sich im oberen Bereich in eine konische Fläche, die mit der Bohrstangenachse einen Winkel von mehr als 45°, und im unteren Bereich in eine andere konische Fläche fortsetzt, die mit der Bohrstangenachse einen Winkel von weniger als 45° bildet.

11. Klemmbacke nach Anspruch 9, dadurch gekennzeichnet, daß die Innenfläche wenigstens 20 Vorsprünge aufweist, welche dem Profilierungselement der Bohrstange entsprechen.

12. Vorrichtung zum Tragen einer Bohrstange, dadurch gekennzeichnet, daß sie aus einer Kombination der Bohrstange nach einem der Ansprüche 1 bis 9 und Klemmbacken nach Anspruch 10 bis 11 besteht.

## Claims

1. A drillrod (1) intended for being assembled with other rods of the same nature with the aid of means of connection such as threaded joints in order to form strings of drillrods which will have to be held by jaws at their top end, especially for the oil or natural gas industry, characterized by the fact that away from the means of connection it has at its periphery a surface of revolution consisting of a succession of hollow profiles exhibiting next the axis of the rod a rounded shape (8), the said surface of revolution being intended to serve as a bearing for the inner faces of complementary shape of the self-tightening jaws (2) which ensure the hold on the string of drillrods.

2. A drillrod as in Claim 1, characterized by the fact that the elemental profile of the surface of revolution exhibits a toroidal shape prolonged at its upper and lower portions by frustoconical surfaces.

3. A rod as in Claim 2, characterized by the fact that the generatrix of the frustoconical surface arranged at the upper portion of the elemental profile makes with a perpendicular to the axis of the drillrod an angle lying between 10 and 45° and preferably close to 30°.

4. A drillrod as in Claim 2, characterized by the fact that the generatrix of the frustoconical surface arranged at the lower portion of the elemental profile makes with a perpendicular to the axis of the drillrod an angle lying between about 45 and 80° and preferably close to 60°.

5. A drillrod as in one of the Claims 2, 3 or 4, characterized by the fact that the generatrices of the frustoconical surfaces make an angle between them of about 90°.

6. A drillrod as in any one of the preceding Claims, characterized by the fact that the total depth of the elemental profile lies between about 1 and 2 and mm and preferably close to 1.5 mm.

7. A rod as in any one of the preceding Claim, characterized by the fact that the surface of revolution extends over a length of rod of about 100 to 900 mm and preferably close to 600 mm.

8. A rod as in any one of the preceding Claims, characterized by the fact that the elemental profiles are repeated at a pitch of about 1 to 10 and preferably of about 5 mm.

9. A rod as in any one of, the preceding Claims, characterized by the fact that the surface of revolution is realized by knurling or tumbling.

10. Self-tightening jaws for holding a drillrod as in any one of the preceding claims, characterized by the fact that the inner surface of the self-tightening jaws exhibits along its periphery a surface of revolution consisting of a succession of profiles in relief exhibiting in the direction of the drillrod a rounded convex shape complementary with the rounded shape of the hollow profiles situated on the drillrod, each profile in relief being prolonged at the upper portion of it by a frustoconical surface making with the axis of the rod an angle greater than 45° and at the lower portion of it by another frustoconical surface making with the axis of the rod an angle less than 45°.

11. Jaws as in Claim 9, characterized by the fact that the inner surface includes at least 20 teeth corrsponding with the elemental profile of the drillrod.

12. A device for supporting a drillrod, characterized by the fact that it includes in combination a drillrod as in any one of the claims 1 to 9, and jaws as in the claims 10 and 11.

## Fig. 1

Fig.2

Fig. 3

Fig. 4

14

13

13

13

15